# EUROPÄISCHE PATENTSCHRIFT

(11) **EP 3 922 334 B1**
(45) Veröffentlichungstag und Bekanntmachung des Hinweises auf die Patenterteilung: **22.11.2023**
(21) Anmeldenummer: 21176981.5
(22) Anmeldetag: 31.05.2021
(51) Int. Cl.: B01D 29/01, A61C 17/06, B01D 29/05, B01D 46/00

(54) **FILTEREINHEIT FÜR EINE SAUGVORRICHTUNG UND SAUGVORRICHTUNG**
SUCTION DEVICE AND FILTER UNIT FOR A SUCTION DEVICE
UNITÉ DE FILTRE POUR UN ASPIRATEUR ET ASPIRATEUR

(30) Priorität: 08.06.2020 EP 20178845
(43) Veröffentlichungstag der Anmeldung: 15.12.2021
(73) Patentinhaber: BPR Swiss GmbH, 3672 Oberdiessbach (CH)
(72) Erfinder: MAURER, Marc, 3600 Thun (CH); MAURER, Marcel, 2560 Nidau (CH); STRAUCH, Patrick, 3512 Walkringen (CH)
(74) Vertreter: Rutz & Partner

(56) Entgegenhaltungen:
- EP-A1- 0 269 589
- US-A- 3 815 754
- US-A- 4 056 376
- US-B1- 6 485 544

## Beschreibung

Die Erfindung betrifft eine Filtereinheit zur Filterung eines gasförmigen Mediums und eine Saugvorrichtung mit einer solchen Filtereinheit insbesondere für medizinische Zwecke.

Saugvorrichtungen werden in zahlreichen Bereichen der Industrie und der Medizin eingesetzt. Eine gattungsgemässe Saugvorrichtung ist z.B. aus der EP3172439B1 bekannt. Mit dieser Saugvorrichtung kann bei einem medizinischen Eingriff ein Medium, das üblicherweise eine Flüssigkeitskomponente und Feststoffpartikel umfasst, durch eine Absaugleitung abgesaugt und in einen Behälter transferiert werden, an den eine mit einer Saugpumpe verbundene Ansaugleitung angeschlossen ist. Im Behälter wird das abgesaugte Medium in eine flüssige Komponente, gegebenenfalls versetzt mit den Feststoffpartikeln, und in eine gasförmige Komponente aufgeteilt. Die flüssige Komponente verbleibt mit den Feststoffpartikeln im Behälter und die gasförmige Komponente wird durch die Ansaugleitung zu einer Filtereinheit geführt, in der die Raumhygiene beeinträchtigende und potenziell gesundheitsgefährdende Partikel ausgefiltert werden.

Aus der EP3172439B1 ist bekannt, dass es besonders wichtig ist, das Medium mit hoher Saugkraft anzusaugen und die gasförmige Komponente mit möglichst hoher Strömungsgeschwindigkeit durch die Filtereinheit zu treiben. Zu diesem Zweck umfasst die dort offenbarte Saugvorrichtung eine als Strahlpumpe, insbesondere als Venturi-Pumpe oder als Ejektor-Pumpe, ausgebildete erste Saugeinheit und eine als Verdrängerpumpe oder Gebläsepumpe ausgebildete zweite Saugeinheit. Mit den beiden Saugeinheiten wird in der Ansaugleitung ein entsprechend hoher Unterdruck erzeugt.

Durch die Verwendung von zwei Saugeinheiten resultieren grössere Abmessungen der Saugvorrichtung. Allgemein ist es hingegen erwünscht, dass Apparate und Vorrichtungen insbesondere im medizinischen Bereich eine hohe Leistung und trotzdem möglichst schlanke Dimensionen aufweisen.

Nur wenn ein genügend grosses Volumen einer gasförmigen Komponente in gegebener Zeit durch die Filtereinheit getrieben werden kann, ist auch die Saugkraft unverändert hoch. Um dies anzustreben, wäre es möglich, Anschlussleitungen mit möglichst grossem Querschnitt einzusetzen, die z.B. den Querschnitt des Filters aufweisen. Dies ist normalerweise aber nicht möglich, da die Abmessungen der Leitungen, welche die gasförmige Komponente führen, aufgrund eingeschränkter Platzverhältnisse und gegebener Industriestandards beschränkt sind.

Aus der US2010044299A1 ist eine Filtereinheit bekannt, die der Filterung von Flüssigkeiten, insbesondere Blut, dient und die ein Gehäuse mit einem Eingangsteil und einem Ausgangsteil aufweist, zwischen denen mehrere plattenförmige Filterelemente eingespannt werden können. Bei der Verwendung mehrerer übereinander liegender Filter werden diese durch Abstandsringe voneinander getrennt, so dass die Filter parallel zueinander ausgerichtet bleiben und Überdehnungen und daraus resultierende Risse in den Filterplatten vermieden werden.

Aus der US4159954A ist eine weitere Filtereinheit bekannt, die der Filterung von Flüssigkeiten dient und die ein Gehäuse mit einem Eingangsteil und einem Ausgangsteil aufweist, zwischen denen ein plattenförmiges Filterelement gehalten ist. Zur Verteilung der Flüssigkeit ist das Eingangsteil mit Rippen versehen, durch die die Flüssigkeit verteilt wird. Dadurch soll verhindert werden, dass die Filterplatte durch die einströmende nicht-kompressible Flüssigkeit aufgerissen wird.

Bei kompressiblen gasförmigen Medien treten diese Probleme hingegen nicht auf. Bei Filtereinheiten, die zur Filterung eines gasförmigen Mediums vorgesehen sind, werden oft ein ungenügend hoher Durchsatz des gasförmigen Mediums und eine unbefriedigende Abtrennung unerwünschter Medienanteile bemängelt. Insbesondere nach relativ kurzer Betriebsdauer wird oft ein Leistungsabfall der Filtereinheit beobachtet, der einen relativ frühen Austausch der Filtereinheit erfordert, was einen entsprechenden Wartungsaufwand und entsprechend hohe Kosten verursacht, da qualitativ hochwertige Filter hinsichtlich des hohen Fertigungsaufwandes relativ teuer sind.

Filtereinheiten verursachen während des Betriebs zudem oft störende Geräusche, die insbesondere in medizinischen Behandlungsräumen unerwünscht sind.

Die EP0269589A1 offenbart eine Filterdose zum Anschluss an eine Atemschutzmaske.

Die US4056376A offenbart ein Luftfilter für Inhalationstherapien, bei denen die einem Patienten zugeführte Luft gefiltert wird.

Die US6485544B1 offenbart ein gefaltetes Filter.

Die US3815754A offenbart ein Filter mit einer Fluidkammer und zwei Fluidanschlüssen, die koaxial zueinander ausgerichtet sind und durch die hindurch, in die eine oder andere Richtung, ein Fluid durch das Filter geführt werden kann.

Der vorliegenden Erfindung liegt daher die Aufgabe zugrunde, eine verbesserte Filtereinheit zur Filterung eines gasförmigen Mediums sowie eine verbesserte Saugvorrichtung mit einer solchen Filtereinheit zur Filterung eines gasförmigen Mediums zu schaffen, die vorteilhaft im medizinischen Bereich einsetzbar ist.

Die Filtereinheit soll möglichst geringe Abmessungen und bei gegebener Saugleistung der Saugvorrichtung einen höheren Durchfluss des gasförmigen Mediums sowie eine verbesserte Abtrennung unerwünschter Medienanteile, wie Feststoffe und Flüssigkeitsanteile, erlauben.

Verbesserte Filterelemente, die eine erhöhte Lebensdauer und eine verbesserte Betriebsleistung aufweisen, sollen kostengünstig hergestellt werden können.

Die Saugvorrichtung und die Filtereinheit sollen mit reduziertem Wartungsaufwand und möglichst mit reduzierter Leistung betrieben werden können.

Die Saugvorrichtung, welche mit einer oder auch mit zwei Saugeinheiten ausgerüstet sein kann, soll eine erhöhte Saugwirkung aufweisen.

Eine erhöhte Saugleistung und/oder ein erhöhter Durchfluss der gasförmigen Komponente sollen erreicht werden können, ohne die Abmessungen der Filtereinheit und der gasführenden Leitungen zu erhöhen.

Weiterhin sollen beim Betrieb der Filtereinheit und der Saugvorrichtung störende Geräusche reduziert werden, sodass die Filtereinheit und die Saugvorrichtung auch unter anspruchsvollen Arbeitsbedingungen eingesetzt werden können.

Diese Aufgabe wird mit einer Filtereinheit und einer Saugvorrichtung gelöst, welche die in Anspruch 1 und Anspruch 11 angegebenen Merkmale aufweisen. Vorteilhafte Ausgestaltungen der Erfindung sind in weiteren Ansprüchen angegeben.

Die Filtereinheit, die insbesondere für den Einsatz mit einer Saugvorrichtung im medizinischen Bereich zur Filterung eines gasförmigen Mediums vorgesehen ist, umfasst ein Filtergehäuse, das ein Durchgangsrohr mit einem Aufnahmeraum, in dem ein erstes Filterelement gehalten ist, und ein eingangsseitig an das Durchgangsrohr anschliessendes Eingangsteil aufweist, an das auf der vom Aufnahmeraum abgewandten Aussenseite eine Eingangsleitung angeschlossen ist, durch die das gasförmige Medium in den Aufnahmeraum einführbar ist.

Erfindungsgemäss ist vorgesehen, dass das erste Filterelement innerhalb des Aufnahmeraums durch einen Klebstoff derart mit dem Durchgangsrohr verbunden ist, dass der Raum zwischen dem ersten Filterelement und dem Durchgangsrohr abgedichtet und zwischen dem eingesetzten ersten Filterelement und dem Eingangsteil des Gehäuses bzw. dem Gehäuseboden ein Diffusionsraum freigehalten ist.

Der Klebstoff hat eine doppelte Funktion. Einerseits wird das Filterelement auf passender Höhe gehalten, so dass ein definierter Diffusionsraum freigehalten ist. Andererseits wird der Raum zwischen dem Filterelement und der Wand des Durchgangsrohrs abgedichtet, sodass das gasförmige Medium zwangsläufig das Dichtungselement durchläuft.

Die Abmessungen des Diffusionsraums sind derart gewählt, dass das durch die Eingangsleitung in das Filtergehäuse einströmende oder hinein geförderte gasförmige Medium sich innerhalb des Diffusionsraums vorzugsweise über den gesamten Querschnitt des Filterelements verteilen und dieses durchfliessen kann, was mit verschiedenen Vorteilen verbunden ist.

Der Diffusionsraum weist vorzugsweise zumindest annähernd denselben Querschnitt auf, wie der Aufnahmeraum oder das in die Filtereinheit eingesetzte Filterelement. Hingegen kann der Diffusionsraum nur eine minimale Höhe oder Länge aufweisen, mit der sichergestellt wird, dass die Diffusion des einströmenden Mediums, insbesondere verunreinigter Luft, ungehindert erfolgen kann. Der Diffusionsraum kann daher realisiert werden, ohne dass eine spürbare Vergrösserung des Filtergehäuses resultiert.

Das Filterelement weist vorzugsweise einen runden, rechteckigen, quadratischen oder polygonalen Querschnitt auf. Die Ausgestaltung des Filterelements mit einem polygonalen Querschnitt hat den Vorteil, dass zwischen den Seiten des mehrkantigen Filterelements und der Innenseite des Durchgangsrohrs Raum freigehalten wird, der der Aufnahme des Klebstoffs dient.

Die erfindungsgemässe Filtereinheit kann mit geringen Abmessungen realisiert werden. Eine verbesserte Saugleistung und ein erhöhter Durchfluss können erzielt werden, ohne den Querschnitt der gasführenden Leitungen zu erhöhen. Hingegen wird mit der erfindungsgemässen Lösung praktisch derselbe Effekt erzielt, wie bei der Verwendung von Anschlussleitungen mit einem Querschnitt, welcher etwa dem Querschnitt des Filterelements entspricht.

Vorteilhafterweise kann das Eingangsteil bzw. der Gehäuseboden eben ausgebildet werden, sodass das Eingangsteil der Filtereinheit praktisch keinen Raum in Anspruch nimmt und keine Strömungsverluste resultieren.

Aufgrund der Realisierung eines Diffusionsraums wird das Filterelement vom gasförmigen Medium über den gesamten Querschnitt und über die gesamte Länge zumindest annähernd gleichmässig durchströmt. Auf diese Weise kann das Filterelement einen optimalen Nutzen entfalten. Die eingangsseitige Apertur des Filterelements ist maximal, weshalb auch der durch das Filterelement verursachte Strömungswiderstand auf ein Minimum reduziert wird. Eine gewünschte Strömung kann daher mit reduzierter Leistung erreicht werden.

Durch die Öffnung der Apertur wird das Filterelement eingangsseitig nicht nur über den gesamten Querschnitt genutzt, sondern auch über den gesamten Querschnitt belastet, wodurch eine Reduktion der Belastung pro Volumeneinheit des Filterelements resultiert. Ausgefilterte Partikel konzentrieren sich nicht eingangsseitig an einem Bruchteil des Querschnitts des Filterelements, sondern werden gleichmässig über den gesamten Querschnitt des Filterelements abgelagert. Entsprechend resultieren in dem vom Medium durchflossenen Eingangsbereich wesentlich reduzierte Belastungen. Dadurch wird verhindert, dass das Filterelement über die gesamte Länge ungleich belastet und der Eingangsbereich des Filterelements während des Betriebs frühzeitig mit ausgefilterten Partikeln überlastet wird, welche die durchströmte Filterzone sättigen und einen zusätzlichen Strömungswiderstand bilden. Mit der erfindungsgemässen Lösung wird der Eingangsbereich des Filterelements nicht stärker belastet als die anderen Filterbereiche. Es wird daher verhindert, dass ein Austausch des Filterelements erforderlich ist, weil eine bestimmte Zone stärker belastet und früher gesättigt ist. Ein Austausch des Filterelements ist erst notwendig, wenn dieses über das gesamte Volumen gleichmässig eine maximal zulässige Belastung erreicht hat.

In vorzugsweisen Ausgestaltungen ist wenigstens ein Distanzelement vorgesehen, welches sicherstellt, dass das Filterelement bei der Montage und/oder später beim Betrieb der Filtereinheit nicht in den Diffusionsraum eintreten und dessen Volumen reduzieren kann.

Das wenigstens eine Distanzelement ist vorzugsweise schulterförmig und/oder ringförmig oder spiralförmig ausgebildet. In einer weiteren vorzugsweisen Ausgestaltung sind mehrere rippenförmige Distanzelemente vorgesehen.

Bei der schulterförmigen und/oder ringförmigen und in sich geschlossenen Ausbildung des Distanzelements schliesst dieses vorzugsweise derart an das Filterelement an, dass der Spalt zwischen dem Filterelement und der Innenwand des Durchgangsrohrs abgeschlossen ist und Klebstoff nicht in den Diffusionsraum eintreten kann.

Die Höhe, mit der das Distanzelement oder die Distanzelemente in den Aufnahmeraum hineinragen, liegt vorzugsweise im Bereich von 1 mm - 10 mm. Vorzugsweise sind die Höhe, mit der das Distanzelement oder die Distanzelemente in den Aufnahmeraum hineinragen, und die Festigkeit des Filterelements aufeinander abgestimmt, sodass der Diffusionsraum auch bei einer Deformation, gegebenenfalls einem Aufquellen, des Filterelements von diesem nicht ausgefüllt wird und die Diffusion des einströmenden Mediums ungehindert auf den gesamten Querschnitt des Filterelements erfolgen kann.

Die Breite des Distanzelements oder der Distanzelemente ist vorzugsweise um einen Faktor im Bereich von 0.5 - 10 kleiner gewählt als die Höhe des Distanzelements oder der Distanzelemente.

Das Distanzelement oder die Distanzelemente sind vorzugsweise konzentrisch zur Längsachse der Filtereinheit oder zur Längsachse des eingesetzten Filterelements angeordnet, damit dieses gleichmässig gestützt wird. Die Eingangsleitung ist zumindest im Anschlussbereich vorzugsweise koaxial zur Längsachse des eingesetzten Filterelements angeordnet.

Sofern rippenförmige Distanzelemente vorgesehen sind, so verlaufen diese vorzugsweise gleichmässig zueinander beabstandet. Vorzugsweise sind die rippenförmigen Distanzelemente radial oder geneigt zu einer radialen Ausrichtung angeordnet.

Die Distanzelemente sind vorzugsweise einstückig am Gehäuseboden bzw. am Eingangsteil angeformt. Das Eingangsteil oder das gesamte Filtergehäuse können somit einstückig aus Kunststoff geformt sein.

Um die freie Diffusion des Mediums im Diffusionsraum weiter zu optimieren, sind das Distanzelement oder die Distanzelemente vorzugsweise mit Durchbrüchen oder Öffnungen versehen. Das gasförmige Medium kann durch die Durchbrüche und Öffnungen leicht hindurch treten während das Filterelement noch immer stabil gehalten ist.

Das Durchgangsrohr weist vorzugsweise einen polygonalen oder kreisförmigen Querschnitt auf. Vorzugsweise schliesst das Filterelement dicht an die Seitenwand oder die Seitenwände des Durchgangsrohrs an, sodass das Medium die Filtereinheit über einen maximalen Querschnitt innerhalb des Filterelements durchläuft und nur wenig Klebstoffmasse oder Dichtungsmasse erforderlich ist, um den Raum zwischen dem Filterelement und der Innenseite des Durchgangsrohrs abzudichten.

Ausgangsseitig ist das Filtergehäuse vorzugsweise mit einem Ausgangsteil verbunden, das an das Durchgangsrohr anschliesst, ringförmig oder deckelförmig ausgestaltet ist und wenigstens eine Ausgangsöffnung aufweist. Das Ausgangsteil ist fest, einstückig oder, gegebenenfalls durch Gewindeelemente oder Rastelemente, lösbar mit dem Durchgangsrohr verbunden.

Das Filterelement wird vorzugsweise durch mehrfaches Falten eines streifenförmigen Filtermaterials oder Filterlaminats gefertigt. Dazu wird ein vorzugsweise rechteckförmiger Filterstreifen mehrfach gefaltet, sodass mehrere vorzugsweise gleichgrosse Filterplatten resultieren. Bei der Faltung eines rechteckförmigen Filterstreifens resultiert ein quaderförmiges oder würfelförmiges Filterelement.

Vorzugsweise wird das Filterelement serpentinenförmig geformt, wobei die Filterplatten, die paarweise je um eine Faltachse gefaltet sind, zumindest annähernd parallel zueinander ausgerichtet und voneinander beabstandet sind. Auf diese Weise erhält das Filterelement eine entsprechend grosse Eintrittsfläche und eine entsprechend grosse Austrittsfläche, sodass sich das gasförmige Medium über eine grosse Fläche verteilen kann und das Filterelement pro Flächeneinheit nur minimal belastet wird. Eine Sättigung des Filterelements tritt daher selbst bei erhöhtem Volumenstrom des Mediums zu einem viel späteren Zeitpunkt auf. Entsprechend dem Faktor der Faltung kann daher ein höheres Volumen des gasförmigen Mediums durch die Filtereinheit hindurchgeführt werden, bevor eine Sättigung oder Erschöpfung des Filterelements eintritt.

Die Filterplatten sind in einer vorzugsweisen Ausgestaltung geneigt oder senkrecht zur Längsachse der Filtereinheit angeordnet, sodass die Filterplatten sequenziell durchlaufen werden und eine hohe Reinheit des gefilterte Mediums erzielt wird.

Vorzugsweise werden die Filterplatten hingegen parallel zur Längsachse ausgerichtet, sodass das gasförmige Medium nur eine Filterplatte durchläuft. Vorzugsweise wird vorgesehen, dass die Filterplatten parallel und die Faltachsen senkrecht zur Längsachse der Filtereinheit ausgerichtet sind. Das würfelförmige oder quaderförmige Filterelement wird vorzugsweise mit einer Längsachse koaxial zur Längsachse der Filtereinheit in das Durchgangsrohr eingesetzt.

Damit das Filterelement in der gewünschten Form, gegebenenfalls Serpentinenform, erhalten bleibt ist vorzugsweise wenigstens ein Befestigungselement vorgesehen. Vorzugsweise ist das Filterelement beidseitig mit je einem Befestigungselement versehen, welche die Zwischenräume zwischen den Filterplatten seitlich begrenzt. Das in einen Zwischenraum eingeführte gasförmige Medium kann daher nicht zwischen den Filterplatten seitlich entweichen, sondern ist gezwungen, eine Filterplatte zu durchlaufen.

Vorzugsweise sind die Befestigungselemente Klebstoffverbindungen, welche die Filterplatten peripher miteinander verbinden und die Zwischenräume seitlich abschliessen. Ein Befestigungselement bildet vorzugsweise ein Wandelement, welches das Filterelement seitlich begrenzt.

In vorzugsweisen Ausgestaltungen schliesst an das erste Filterelement wenigstens ein zweites Filterelement an, das vorzugsweise im deckelförmigen Ausgangsteil gehalten ist und einerseits vorzugsweise an das erste Filterelement und andererseits vorzugsweise an die wenigstens eine Ausgangsöffnung im Ausgangselement anschliesst. Das zweite Filterelement erfüllt eine Filterfunktion und/oder eine Schalldämpfungsfunktion.

Durch das zweite vorzugsweise poröse Filterelement kann die Schallenergie vor allem von Schall in hohen Frequenzbereichen reduziert und an die Ausgangsöffnungen des deckelförmigen Ausgangsteils abgegeben werden. Im zweiten Filterelement wird Schallenergie in Wärmeenergie gewandelt. Zudem wird das gasförmige Medium innerhalb des zweiten Filterelements gleichmässig verteilt der Ausgangsöffnung oder den Ausgangsöffnungen zugeführt, wodurch punktuell erhöhte Volumenströme, die ein Pfeifen oder Rauschen verursachen, vermieden werden.

Vorzugsweise wird ein deckelförmiges Ausgangsteil vorgesehen, an dem Ausgangsöffnungen frontal und/oder seitlich vorgesehen sind. Die seitliche Anordnung der Ausgangsöffnungen führt ebenfalls zu einer wesentlichen Geräuschreduktion. Insbesondere werden bei der Umlenkung Schallanteile in den höheren Frequenzbereichen reduziert. Vorzugsweise sind mehrere Ausgangsöffnung gleichmässig beabstandet in einem Kreis angeordnet.

Eine optimale Geräuschreduktion resultiert bei Verwendung des zweiten Filterelements und einem Ausgangsteil mit seitlichen Auslassöffnungen.

Sofern das erste Filterelement bis in das zweite Ausgangsteil hinein geführt ist und an die Ausgangsöffnung oder die Ausgangsöffnungen anschliesst, wird ebenfalls eine Geräuschreduktion erzielt.

Die erfindungsgemässe Filtereinheit kann vorteilhaft an Saugvorrichtungen angeschlossen werden, mittels denen Flüssigkeit und/oder Feststoffpartikel während medizinischen oder zahnmedizinischen Eingriffen abgesaugt werden.

Saugvorrichtungen dieser Art umfassen vorzugsweise einen Behälter, der einerseits mit einer vom Anwender bedienten Absaugleitung und andererseits mit einer Ansaugleitung verbunden ist, die über eine Saugeinheit oder Pumpe mit der Filtereinheit verbunden ist. Im Behälter wird das Medium in eine flüssige Komponente und in eine gasförmige Komponente aufgeteilt. Die flüssige Komponente verbleibt im Behälter und die gasförmige Komponente wird weiter zur Filtereinheit gefördert. In der Filtereinheit werden Restpartikel aus dem Gasstrom entfernt, sodass gereinigte Luft aus der Filtereinheit austritt, welche die Raumhygiene nicht mehr gefährdet.

Nachfolgend wird die Erfindung anhand von Zeichnungen näher erläutert. Dabei zeigt:
- Fig. 1: eine erfindungsgemässe Saugvorrichtung mit einem Behälter 3, der einerseits mit einer Absaugleitung 31, durch die eine Medium M ansaugbar ist, das im Behälter 3 in eine flüssige Komponente MF und in eine gasförmige Komponente MG aufgeteilt wird, und der andererseits mit einer Ansaugleitung 32 verbunden ist, die an eine Saugeinheit 2 angeschlossen ist, welche die gasförmige Komponente MG einer Filtereinheit 1 zuführt;

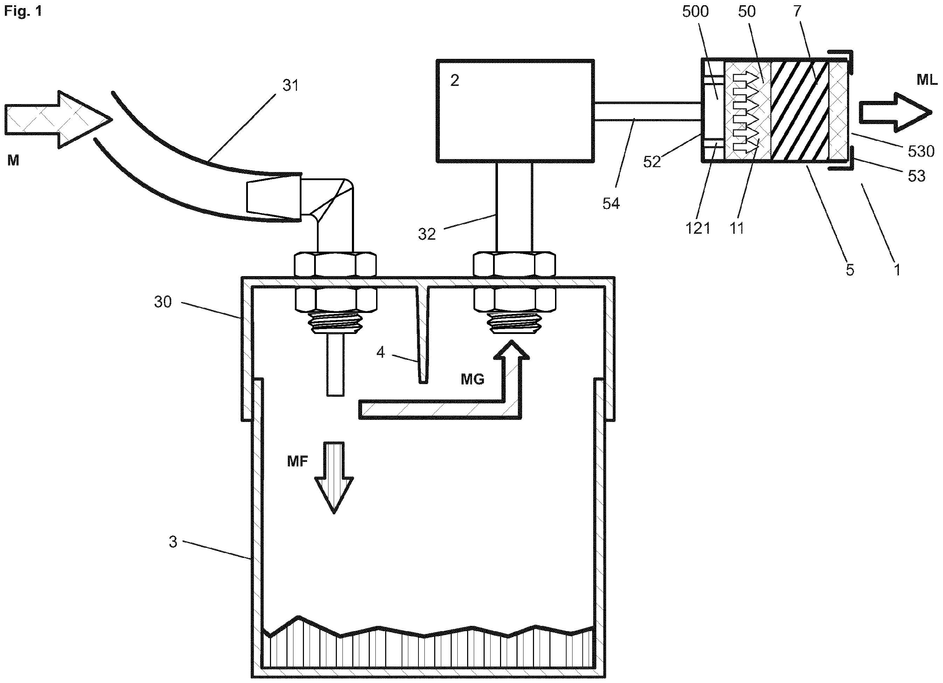

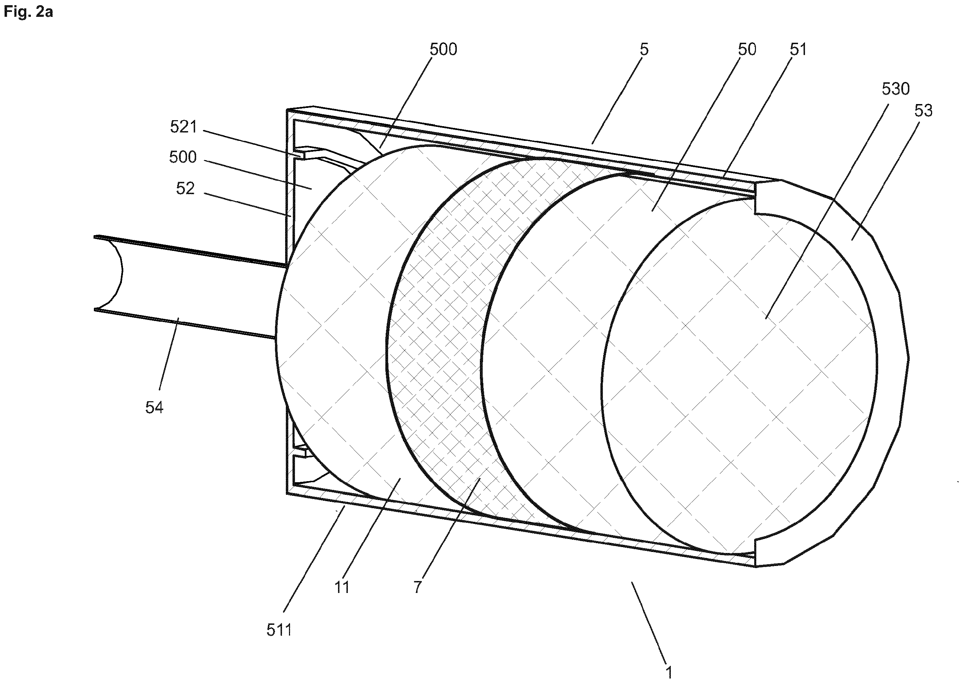

- Fig. 2a: die Filtereinheit 1 von Fig. 1 in einer vorzugsweisen Ausgestaltung mit einem in einem Längsschnitt gezeigten Filtergehäuse 5, das ein Durchgangsrohr 51 umfasst, das ausgangsseitig mit einem ringförmigen Ausgangsteil 53 und eingangsseitig mit einem Eingangsteil 52 verbunden ist, und das einen Aufnahmeraum 50 umschliesst, in dem ein Filterelement 11 durch einen Klebstoff 7 derart mit der Innenseite des Durchgangsrohrs 51 verbunden ist, dass der Raum zwischen dem ersten Filterelement 11 und dem Durchgangsrohr 51 abgedichtet und zwischen dem Filterelement 11 und dem Eingangsteil 52 ein Diffusionsraum 500 freigehalten ist;
- Fig. 2b: die Filtereinheit 1 von Fig. 2a nach Entnahme des Filterelements mit dem Eingangsteil 52 in der Ausgestaltung eines ebnen Gehäusebodens, an den eine Eingangsleitung 54 angeschlossen ist und der ein in den Aufnahmeraum 50 des Gehäuses 5 hinein ragendes ringförmiges Distanzelement 521 aufweist, durch das zwischen einem eingesetzten Filterelement 11 und dem Gehäuseboden 52 ein Diffusionsraum 500 freigehalten wird;
- Fig. 2c: die Filtereinheit 1 von Fig. 2a ohne Ausgangsteil 53;
- Fig. 3: die Filtereinheit 1 von Fig. 2a von der Eingangsseite her gesehen mit dem teilweise weggeschnittenen Gehäuseboden 52 und mit dem ringförmigen Distanzelement 521 und der zumindest annähernd zylindrischen Klebstoffschicht 7, mittels der das Filterelement 11 gehalten ist;
- Fig. 4: die Filtereinheit 1 von Fig. 3 mit acht rippenförmigen Distanzelementen 521, die konzentrisch und radial zur Eingangsleitung 54 bzw. zur Eingangsöffnung 520 am Eingangsteil 52 angeordnet sind;
- Fig. 5a: in Explosionsdarstellung eine erfindungsgemässe Filtereinheit 1, die optional mit einem zweiten Filterelement 12 versehen ist, in einer vorzugsweisen Ausgestaltung;
- Fig. 5b: die zusammengebaute Filtereinheit 1 von Fig. 5a mit einem Viertelschnitt; und
- Fig. 6: ein vorzugsweise ausgestaltetes und vorzugsweise ausgerichtetes Filterelement 11 für die Filtereinheiten 1.

Fig. 1 zeigt eine erfindungsgemässe Saugvorrichtung mit einem Behälter 3, der einerseits mit einer vom Anwender bedienten Absaugleitung 31 und andererseits mit einer Ansaugleitung 32 verbunden ist, die an eine mit einer Filtereinheit 1 verbundene Saugeinheit 2 angeschlossen ist. Durch die Saugeinheit 2 wird über die Ansaugleitung 32 ein Unterdruck im Behälter 3 erzeugt, der seinerseits eine Absaugwirkung bzw. ein Medienstrom in der Absaugleitung 31 erzeugt.

Die Absaugleitung 31 ist endseitig z.B. mit einer Kanüle verbunden, mittels der z.B. bei einem medizinischen Eingriff Flüssigkeit und Feststoffpartikel aus einem Operationsfeld abgesaugt werden können. Das abgesaugte Medium M wird im Behälter 3 in eine flüssige Komponente MF und in eine gasförmige Komponente MG aufgetrennt. Die Absaugleitung 31 und die Ansaugleitung 32 sind mit einer Abdeckung 30 des Behälters 3 verbunden, welcher ein Trennelement 4 aufweist, das als zusätzliche Barriere für die flüssige Komponente MF dient.

Die flüssige Komponente MF verbleibt im Behälter 3 und die gasförmige Komponente MG wird durch die Ansaugleitung 32, die Saugeinheit 2 und eine Eingangsleitung 54 zu einer erfindungsgemässen Filtereinheit 1 geführt.

In der gasförmigen Komponente MG verbliebene Partikel, welche die Raumhygiene und die Gesundheit der anwesenden Personen beeinträchtigen könnten, werden in der Filtereinheit 1 gefangen, sodass aus der Filtereinheit 1 ein Medienstroms ML austritt, welcher die Raumhygiene nicht beeinträchtigt.

Fig. 1 zeigt die Filtereinheit 1 in schematischer Ausgestaltung mit einem Filtergehäuse 5, das ein Durchgangsrohr 51 umfasst, das ausgangsseitig mit einem Ausgangsteil 53 und eingangsseitig mit einem Eingangsteil 52 verbunden ist, und das einen Aufnahmeraum 50 umschliesst, in dem ein Filterelement 11 durch einen Klebstoff 7 derart mit der Innenseite des Durchgangsrohrs 51 verbunden ist, dass der Raum zwischen dem ersten Filterelement 11 und dem Durchgangsrohr 51 abgedichtet und zwischen dem Filterelement 11 und dem Eingangsteil 52 ein Diffusionsraum 500 freigehalten ist.

Es ist ersichtlich, dass zwischen dem Gehäuseboden 52 und der Eingangsseite des Filterelements 11 Distanzelemente 521 vorgesehen sind, durch die verhindert wird, dass das in das Durchgangsrohr 51 eingesetzte Filterelement 11 bei der Montage in den Diffusionsraum 500 eintreten kann.

Das gasförmige Medium MG, das durch eine Eingangsleitung in den Diffusionsraum 500 einströmt, kann sich über den gesamten Querschnitt des Filterelements 11 verteilen. Der Diffusionsraum 500 ist überproportional gross gezeichnet und erfordert grundsätzlich nur eine Grösse, welche die gleichmässige Verteilung des einströmenden gasförmigen Mediums MG erlaubt. Der Diffusionsraum 500 hat somit einen Querschnitt, welcher zumindest annähernd dem Querschnitt des Aufnahmeraums 50 oder dem Querschnitt des Filterelements 11 entspricht, dessen Höhe oder Länge auf ein Minimum reduziert werden kann, soweit die homogene Diffusion des einströmenden Mediums MG über den gesamten Querschnitt des Filterelements 11 gewährleistet ist.

Mit Pfeilen ist symbolisch gezeigt, dass das gasförmige Medium MG über den gesamten Querschnitt des Filterelements 11 gleichmässig verteilt in dieses Eintritt. Die Eingangsseite des Filterelements 11 wird dadurch gleichmässig mit dem gasförmigen Medium MG beaufschlagt, welches das Filterelement 11 von der Eingangsseite bis zur Ausgangsseite über den gesamten Querschnitt gleichmässig durchströmt.

Fig. 2a zeigt die vorzugsweise ausgestaltete Filtereinheit 1 von Fig. 1 mit einem Längsschnitt durch das Filtergehäuse 5. Das Durchgangsrohr 51 des Filtergehäuses 5 ist zylindrisch ausgebildet und weist eine relativ dünne Zylinderwand 511 auf, die eingangsseitig einstückig mit dem Eingangsteil bzw. dem Gehäuseboden 52 verbunden ist. An das Eingangsteil 52 ist eingangsseitig vorzugsweise koaxial zur Längsachse der Filtereinheit 1 ausgerichtet die Eingangsleitung 54 angeschlossen, über die das zu filternde Medium MG in die Filtereinheit 1 einführbar ist. Alternativ kann auch

Das Durchgangsrohr 52 umschliesst den Aufnahmeraum 50, in dem das Filterelement 11 durch eine ringförmige Klebstoffschicht 7 gehalten ist. Das Filterelement 11 liegt an der Zylinderwand 511 an und wird durch die Klebstoffschicht 7 mit der Innenwand des Durchgangsrohr 52 verbunden, weshalb das zugeführte Medium ausschliesslich innerhalb des Filterelements 11 die Filtereinheit 1 durchläuft.

Das Eingangsteil 52 ist mit einem Distanzelement 521 verbunden, das in den Aufnahmeraum 50 hineinragt und den Diffusionsraum 50 als Teil des Aufnahmeraumes 50 freihält. Das Filterelement 11 liegt normalerweise am Distanzelement 521 an und wird von der Klebstoffschicht 7 gehalten, weshalb zwischen dem Gehäuseboden 52 und der Eingangsseite des Filterelements 11 der Diffusionsraum 500 offengehalten ist. Das Distanzelement 521 ist daher eine Lehre, die es erlaubt, das Filterelement 11 korrekt zu positionieren.

Das Distanzelement 521 ist in der Höhe und/oder Breite und/oder Ausrichtung und/oder Anzahl und/oder Ausformung vorzugsweise derart ausgebildet, dass sich das Filterelement 11 auch nach längerem Betrieb der Filtereinheit 1 nicht bis zum Gehäuseboden 52 ausdehnen und den Diffusionsraum 500 ganz oder teilweise verschliessen kann. Ferner ist das wenigstens eine Distanzelement 521 derart schmal, dass von der eingangsseitigen Querschnittsfläche des Filterelements nur ein vernachlässigbar kleiner Teil abgedeckt wird. Das wenigstens eine Distanzelement 521 wird daher vorzugsweise so gross wie notwendig und so klein wie möglich gewählt.

Da das Filterelement 11 nach der Montage von Klebstoff 7 gehalten ist, erfüllt das Distanzelement 521 nach der Verfestigung des Klebstoffs 7 keine relevante Tragfunktionen mehr, verhindert aber gegebenenfalls ein unerwünschtes Ausdehnen des Filterelements in den Diffusionsraum 500 hinein.

Fig. 2a zeigt ferner, dass ausgangsseitig auf das Durchgangsrohr 51 ein ringförmiges Ausgangsteil 53 aufgesetzt ist, welches einen Halteflansch bildet, der das Filterelement 11 in Position hält. Das ringförmige Ausgangsteil 53 umschliesst eine Ringöffnung 530, durch die das gefilterte gasförmige Medium, beispielsweise Luft, austreten kann. Das ringförmige Ausgangsteil 53 ist vorzugsweise durch Gewindeelemente oder Rastelemente, die mit Gewindeelementen oder Rastelementen an der Gehäusewand 511 zusammenwirken, lösbar gehalten. Das ringförmige Ausgangsteil 53 kann daher entfernt werden, um das Filterelement 11 auszutauschen.

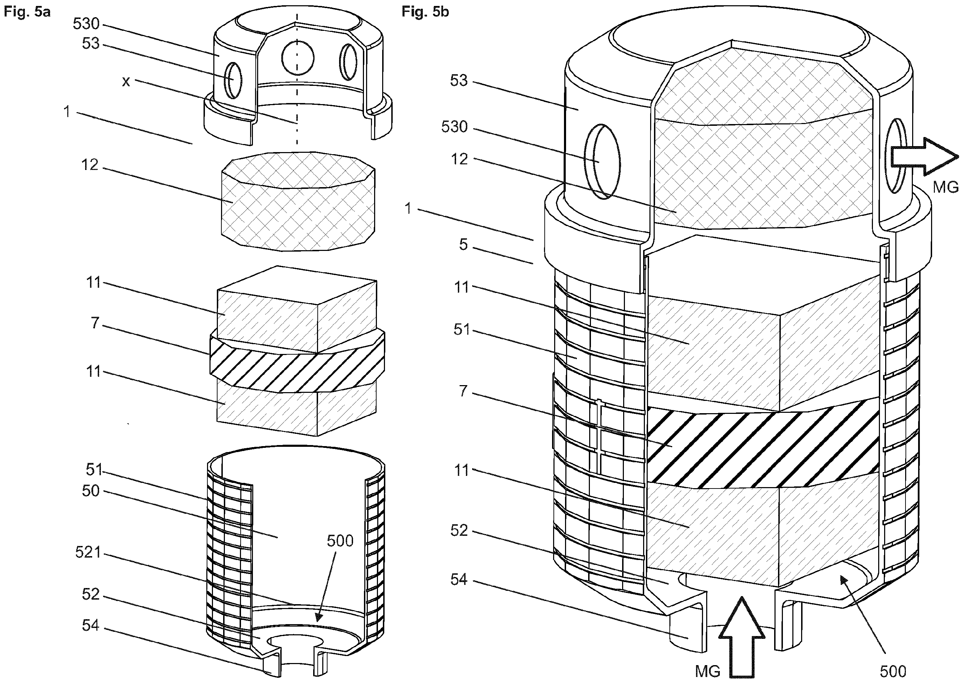

In gleicher Weise kann ein deckelförmiges Ausgangsteil 53 ausgangsseitig mit dem Durchgangsrohr 51 verbunden werden (siehe Fig. 5b) .

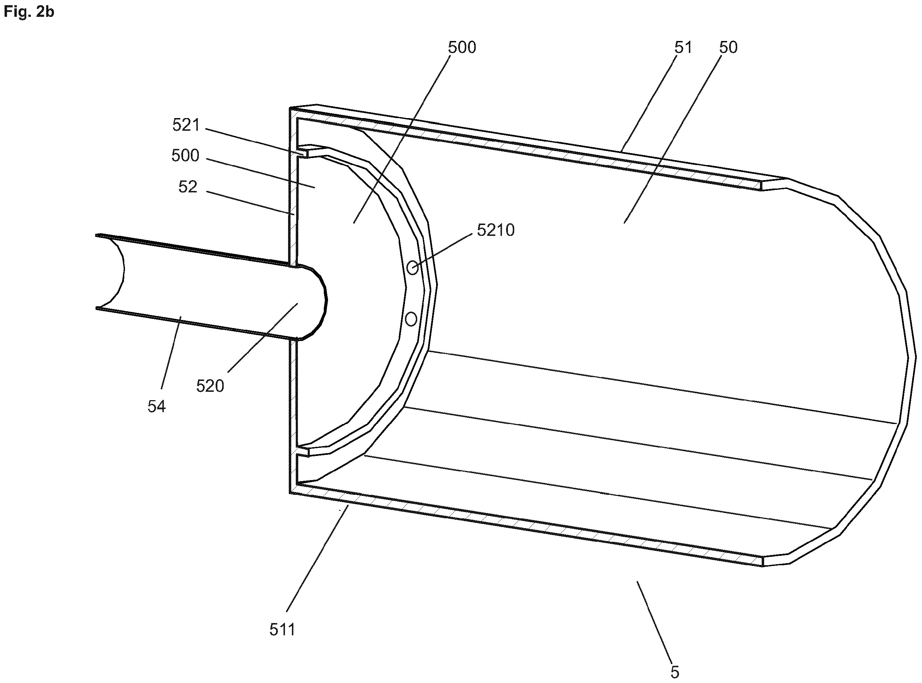

Fig. 2b zeigt die Filtereinheit 1 von Fig. 2a nach Entnahme des Filterelements 11. Es ist ersichtlich, dass das Distanzelement 521 ringförmig ausgebildet ist und die Eingangsöffnung 520, in die die Eingangsleitung 54 einmündet, im Eingangsteil 52 konzentrisch umschliesst. Symbolisch ist gezeigt, dass das Distanzelement 521 Öffnungen oder Durchbrüche 5210 aufweisen kann, durch die hindurch das zugeführte Medium nach aussen gelangen kann.

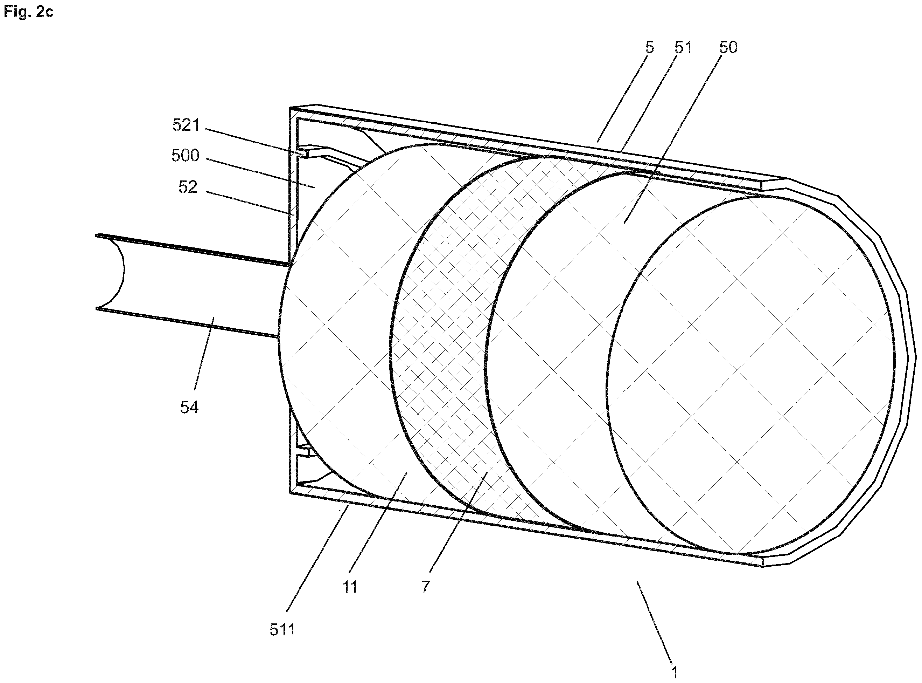

Fig. 2c zeigt die Filtereinheit 1 von Fig. 2a ohne ringförmiges Ausgangsteil 53.

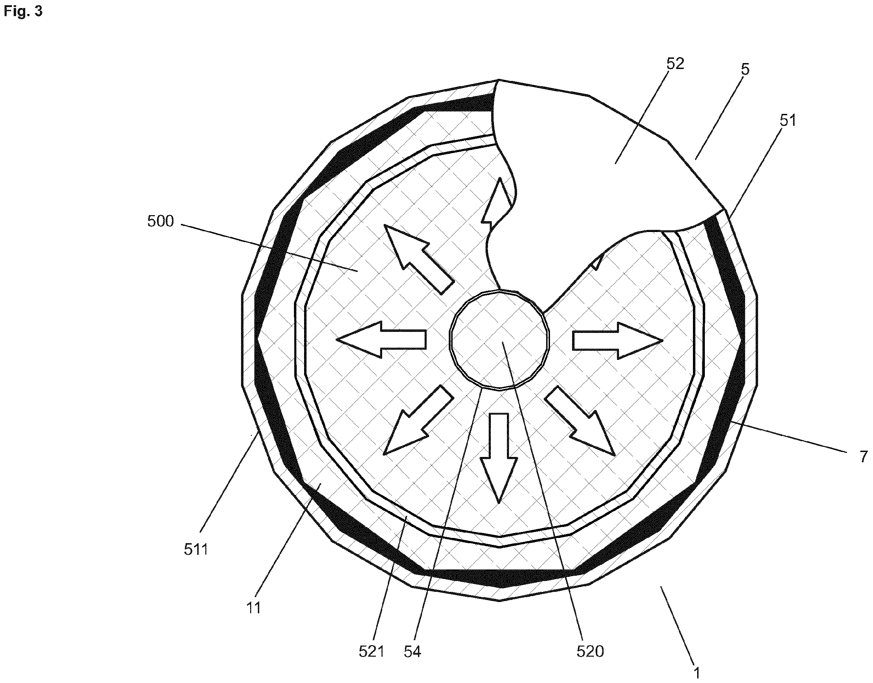

Fig. 3 zeigt die Filtereinheit 1 von Fig. 2a von der Eingangsseite her gesehen mit dem teilweise weggeschnittenen Eingangsteil 52 und mit dem ringförmigen Distanzelement 521, das konzentrisch zur Eingangsöffnung 520 am Eingangsteil 52 angeordnet, vorzugsweise angeformt ist. Durch acht Pfeile ist symbolisiert, dass sich das einströmende Medium gleichmässig verteilen kann. Ferner ist gezeigt, dass der Raum zwischen dem Filterelement 11 und der Innenwand des Durchgangsrohr 51 durch eine ringförmige Klebstoffschicht 7 dicht abgeschlossen ist.

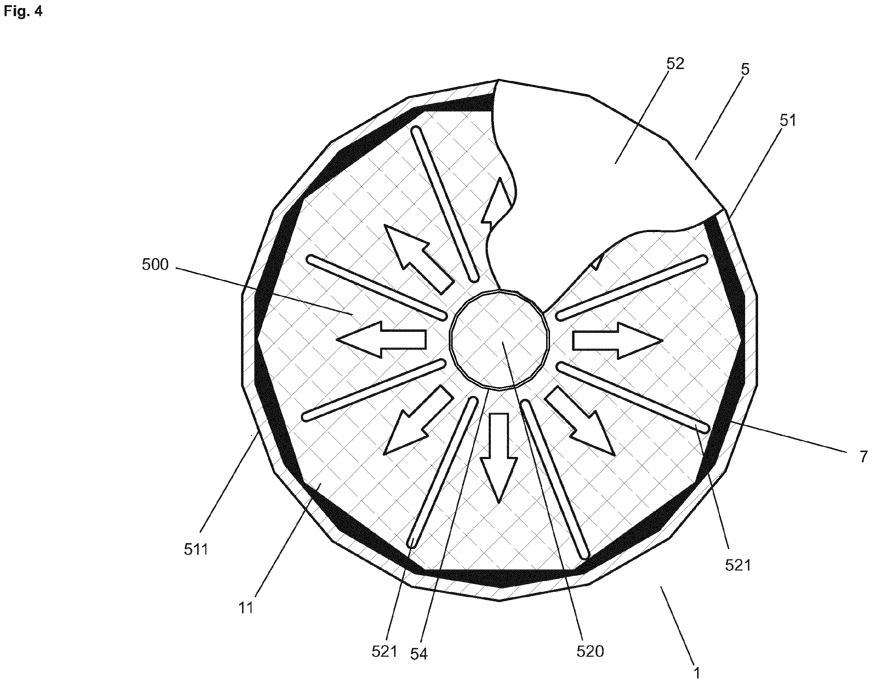

Fig. 4 zeigt die Filtereinheit 1 von Fig. 3 in einer Ausgestaltung, in der das ringförmige Distanzelement 521 von Fig. 3 durch acht rippenförmige Distanzelemente 521 ersetzt wurde. Die Distanzelemente 521 sind in gleichmässigen Abständen konzentrisch und radial zur Eingangsleitung 54 bzw. zur Eingangsöffnung 520 des Gehäusebodens 52 angeordnet. Das einströmende Medium kann sich zwischen den rippenförmigen Distanzelementen 521 ungehindert bis zur Gehäusewand 511 über den gesamten Querschnitt des eingesetzten Filterelements 11 ausbreiten und dieses anschliessend durchströmen. Öffnungen zwischen dem Filterelement 11 und der Wand 511 des Durchgangsrohrs 51 sind durch den Klebstoff 7 verschlossen. Vorzugsweise wird ein Filterelement 11 eingesetzt, dessen Querschnitt etwas grösser ist als der Querschnitt des Aufnahmeraums 50. Das Filterelement 11 wird daher leicht komprimiert und in das Filtergehäuse 5 eingeschoben. Das Filtergehäuse 5 kann auch einen anderen Querschnitt aufweisen, um weitere Filterelemente 11 aufnehmen zu können.

Fig. 5a zeigt eine erfindungsgemässe Filtereinheit 1 in einer vorzugsweisen Ausgestaltung in Explosionsdarstellung.

An die Unterseite des hohlzylindrischen Durchgangsrohrs 51 schliesst ein tellerförmiges Eingangsteil 52 an, das peripher eine Ringschulter bildet, die als Distanzelement 521 dient. Das Filterelement 11 ist derart dimensioniert, dass es auf die Ringschulter 521 aufgesetzt werden kann und nicht in den Diffusionsraum 500 eintreten kann. Das Filterelement 11 ist mit der ringförmigen Klebstoffschicht 7 gezeigt, die das Filterelement 11 teilweise überdeckt. Die Klebstoffschicht 7 kann sich jedoch generell auch über die gesamte Höhe des Filterelements 11 erstrecken, sodass der Raum seitlich zwischen dem Filterelement 11 und dem Durchgangsrohr 51 vollständig abgedichtet ist.

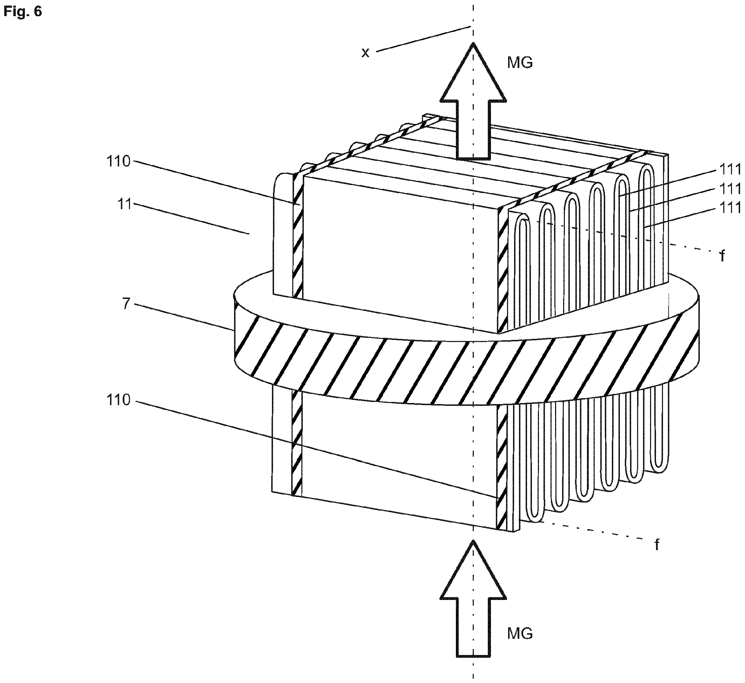

Das Filterelement 11 ist würfelförmig oder quaderförmig ausgebildet, sodass es in einer vorzugsweisen Ausgestaltung beispielsweise gemäss Fig. 6 in einfacher Weise gefertigt werden kann.

Auf das erste Filterelement 11 ist in dieser vorzugsweisen Ausgestaltung optional ein zweites Filterelement 12 aufgesetzt, das eine Filterfunktion und/oder eine Schalldämmungsfunktion aufweist.

Durch das vorzugsweise poröse zweite Filterelement 12 werden Schallschwingungen insbesondere in höheren Frequenzbereichen reduziert. Ferner wird die gefilterte Luft gleichmässig verteilt an die Ausgangsöffnungen 530 des deckelförmigen Ausgangsteils 53 abgegeben. Das Ausgangsteil 53 weist eine zylindrische Seitenwand auf, an der die Ausgangsöffnungen 530 gleichmässig verteilt sind. Das zweite Filterelement 12 kann daher vom Ausgangsteil 53 teilweise oder vollständig aufgenommen werden. Durch den Einsatz des zweiten Filterelements 12 wird somit vermieden, dass ein grösserer Luftstrom an den Kanten der Ausgangsöffnung 530 ein Pfeifen oder Rauschen verursachen kann.

Fig. 5b zeigt die zusammengebaute Filtereinheit 1 von Fig. 5a mit einem Viertelschnitt. Zwischen dem Eingangsteil 52 und der Unterseite des ersten Filterelements 11 ist der Diffusionsraum 500 freigehalten. Das erste Filterelement 11 ist durch die ringförmige Klebstoffschicht 7 dicht abschliessend mit der Innenseite des Durchgangsrohr 51 verbunden. Zwischen dem ersten Filterelement 11 und dem zweiten Filterelement 12 ist ein Zwischenraum freigehalten, in den wenigstens ein weiteres Filterelement eingesetzt werden könnte. In vorzugsweisen Ausgestaltungen schliessen die beiden Filterelemente 11, 12 jedoch kontaktierend aneinander an. Weiter ist gezeigt, dass das gasförmige Medium MG durch die Eingangsleitung 54 in den Diffusionsraum 500 in die Filtereinheit 1 eintritt und durch die Auslassöffnungen 530 seitlich wieder aus der Filtereinheit 1 austritt.

Fig. 6 zeigt ein vorzugsweise ausgestaltetes und vorzugsweise ausgerichtetes Filterelement 11, das von einem Klebstoffring 7 umschlossen ist. Das Filterelement 11 ist aus einem streifenförmigen Filtermaterial oder Filterlaminat gefertigt, das derart mehrfach gefaltet wurde, dass mehrere etwa gleich grosse Filterplatten 111 resultierten. Die serpentinenförmig verlaufenden und miteinander verbundenen Filterplatten 111 sind paarweise um eine zugeordnete Faltachse f gefaltet, parallel zueinander ausgerichtet und paarweise voneinander beabstandet. Durch die Faltung des streifenförmigen Filtermaterials werden die Eintrittsfläche und die Austrittsfläche des Filterelements 11 um mehr als den Faktor 10 vergrössert. Die Eintrittsfläche des Filterelements 11 entspricht somit der Oberfläche des gefalteten Filtermaterials und nicht dem Querschnitt des Filterelements 11.

Die Trennelemente werden durch Befestigungselemente 110 in Position gehalten. Sofern der Klebstoffring 7 das Filterelement 11 seitlich nicht vollständig überdeckt, ist es notwendig die Zwischenräume zwischen den Trennplatten 111 seitlich zu verschliessen. Vorzugsweise werden die Befestigungselemente 110 daher als Klebstoffschichten oder Klebstoffwände realisiert, durch die das Filterelement 11 beidseits dicht abgeschlossen wird, sodass das gasförmige Medium MG nur durch das Filterelement 11 hindurch vom Eingang zum Ausgang der Filtereinheit 1 gelangen kann. Das gasförmige Medium MG kann daher in die Zwischenräume zwischen den Filterplatten 111 eintreten aber nicht seitlich, sondern nur durch die Filterplatten 111 zum Ausgang der Filtereinheit 1 gelangen. Vorzugsweise wird das Filterelement 11 in das Durchgangsrohr 51 von Fig. 5b eingesetzt, wie es in Fig. 6 gezeigt ist. Dabei sind die Filterplatten 111 parallel und die Faltachsen f senkrecht zur Längsachse x der Filtereinheit 1 ausgerichtet

Es ist hingegen auch möglich, die Filterplatten 111 senkrecht zur Längsachse x der Filtereinheit 1 auszurichten, sodass das gasförmige Medium die Filterplatten 111 sequenziell durchläuft. Bei dieser Ausgestaltung kann auch ein streifenförmiges Filtermaterial verwendet werden, welches vorzugsweise entsprechend der Grösse der Filterplatten 111 abgestuft unterschiedliche Filtereigenschaften aufweist. Beispielsweise kann vorgesehen werden, dass die erste Trennplatte 111 hydrophob ausgebildet ist und eine zuverlässige Abtrennung von Flüssigkeit bereits am Eingang des Filterelements 11 bewirkt.

## Patentansprüche

1. Filtereinheit (1) für eine Saugvorrichtung, mittels der ein gasförmiges Medium (MG) gefiltert wird, mit einem Filtergehäuse (5), das ein Durchgangsrohr (51) mit einem Aufnahmeraum (50), in dem ein erstes Filterelement (11) gehalten ist, und ein eingangsseitig an das Durchgangsrohr (51) anschliessendes Eingangsteil (52) aufweist, an das auf der vom Aufnahmeraum (50) abgewandten Aussenseite eine Eingangsleitung (54) angeschlossen oder anschliessbar ist, durch die das gasförmige Medium (MG) in den Aufnahmeraum (50) einführbar ist, wobei das erste Filterelement (11) innerhalb des Aufnahmeraums (50) durch einen Klebstoff (7) derart mit dem Durchgangsrohr (51) verbunden ist, dass der Raum zwischen dem ersten Filterelement (11) und Innenseite des Durchgangsrohrs (51) abgedichtet und zwischen dem eingesetzten ersten Filterelement (11) und dem Eingangsteil (52) ein Diffusionsraum (500) freigehalten ist,
**dadurch gekennzeichnet,**
**dass** das Filtergehäuse (5) ein ausgangsseitig an das Durchgangsrohr (51) anschliessendes Ausgangsteil (53) aufweist, das deckelförmig ausgestaltet ist und das einstückig, formschlüssig oder kraftschlüssig, gegebenenfalls durch Gewindeelemente oder Rastelemente, lösbar mit dem Durchgangsrohr (51) verbunden ist; und
**dass** das Ausgangsteil (53) seitlich eine oder mehrere Ausgangsöffnungen (530) aufweist und ein zweites Filterelement (12), das zur Erfüllung einer Schalldämpfungsfunktion vorgesehen ist, ganz oder teilweise umschliesst.

2. Filtereinheit (1) nach Anspruch 1, **dadurch gekennzeichnet, dass** an der dem Aufnahmeraum (50) zugewandten Innenseite des Eingangsteils (52) wenigstens ein in den Aufnahmeraum (50) hineinragendes Distanzelement (521) angeordnet oder am Eingangsteil (52) angeformt ist, durch das verhindert wird, dass das erste Filterelement (11) bei der Montage oder beim Betrieb in den Diffusionsraum (500) eintreten kann.

3. Filtereinheit (1) nach Anspruch 2, **dadurch gekennzeichnet, dass** das wenigstens eine Distanzelement (521) ringförmig, schulterförmig oder spiralförmig ausgebildet und vorzugsweise konzentrisch zur Längsachse der Filtereinheit (1) angeordnet ist oder dass das wenigstens eine Distanzelement (521) radial oder geneigt zur Längsachse der Filtereinheit (1) angeordnet ist.

4. Filtereinheit (1) nach einem der Ansprüche 1 - 3, **dadurch gekennzeichnet, dass** das erste Filterelement (11) zylinderförmig, quaderförmig oder würfelförmig ausgebildet ist oder dass das erste Filterelement (11) zylinderförmig, quaderförmig oder würfelförmig ausgebildet ist und derart auf dem ringförmigen oder schulterförmigen und in sich geschlossenen Distanzelement (521) ruht, dass der Klebstoff (7) nicht in den Diffusionsraum (500) eindringen kann.

5. Filtereinheit (1) nach einem der Ansprüche 1 - 4, **dadurch gekennzeichnet, dass** der vorzugsweise kreisförmige oder polygonale Querschnitt oder Querschnittsverlauf des Durchgangsrohrs (51) an den Querschnitt oder Querschnittsverlauf des Filterelements (11) angepasst ist und dass das erste Filterelement (11) ganz oder teilweise beabstandet vom Durchgangsrohr (51) oder anliegend an das Durchgangsrohr (51) vom Klebstoff (7) gehalten ist.

6. Filtereinheit (1) nach einem der Ansprüche 1 - 5, **dadurch gekennzeichnet, dass** das vorzugsweise quaderförmige oder würfelförmige erste Filterelement (11) ein streifenförmiges Filtermaterial oder Filterlaminat umfasst, das in mehrere vorzugsweise gleich grosse Filterplatten (111) gefaltet ist.

7. Filtereinheit (1) nach Anspruch 6, **dadurch gekennzeichnet, dass** das erste Filterelement (11) serpentinenförmig verläuft und dass die Filterplatten (111), die paarweise um eine Faltachse (f) gefaltet sind, zumindest annähernd parallel zueinander ausgerichtet und voneinander beabstandet sind.

8. Filtereinheit (1) nach Anspruch 6 oder 7, **dadurch gekennzeichnet, dass** die Filterplatten (111) senkrecht zur Längsachse (x) der Filtereinheit (1) ausgerichtet sind oder dass die Filterplatten (111) parallel und die Faltachsen (f) senkrecht zur Längsachse (x) der Filtereinheit (1) ausgerichtet sind.

9. Filtereinheit (1) nach Anspruch 6, 7 oder 8, **dadurch gekennzeichnet, dass** die Filterplatten (111) beidseitig je mittels wenigstens eines Befestigungselements (110) gehalten sind.

10. Filtereinheit (1) nach Anspruch 9, **dadurch gekennzeichnet, dass** die Befestigungselemente (110) Klebstoffverbindungen sind, die die Filterplatten (111) peripher miteinander verbinden oder dass die Befestigungselemente (110) Klebstoffverbindungen sind, die die Filterplatten (111) peripher miteinander verbinden und die zwischen den Filterplatten (111) vorgesehenen Zwischenräume beidseits abschliessen.

11. Saugvorrichtung zum Absaugen von Flüssigkeit und/oder Feststoffpartikeln insbesondere für medizinische Anwendungen mit einer an eine Saugeinheit (2) angeschlossenen Filtereinheit (1) nach einem der Ansprüche 1 - 10.

12. Saugvorrichtung nach Anspruch 11, **dadurch gekennzeichnet, dass** ein Behälter (3) vorgesehen ist, der einerseits mit einer Absaugleitung (31), durch die ein Medium (M) ansaugbar ist, das im Behälter (3) in eine flüssige Komponente (MF) und in eine gasförmige Komponente (MG) aufgeteilt wird, und andererseits mit einer Ansaugleitung (32) verbunden ist, die über eine Saugeinheit (2) mit der Filtereinheit (1) verbunden ist, der die gasförmige Komponente (MG) zuführbar ist.

## Claims

1. Filter unit (1) for a suction device, by means of which a gaseous medium (MG) is filtered, with a filter housing (5) which comprises a transfer tube (51) having an admittance room (50) in which a first filter element (11) is held, and an input part (52) which adjoins the transfer tube (51) on the input side and to which an input line (54) is connected or connectable on the outer side facing away from the admittance room (50), through which transfer tube (51) the gaseous medium (MG) is introducible into the admittance room (50), wherein the first filter element (11) is connected within the admittance room (50) by an adhesive (7) to the transfer tube (51) in such a way that the space between the first filter element (11) and the interior side of the transfer tube (51) is sealed and a diffusion space (500) is kept free between the inserted first filter element (11) and the input part (52),
**characterised in**
**in that** the filter housing (5) comprises an output part (53) which adjoins the transfer tube (51) on the output side, which output part (53) is of cover-shaped design and which is connected to the transfer tube (51) detachably, in one piece, form-fittingly or non-form-fittingly, optionally by means of threaded elements or latching elements; and
that the output part (53) comprises laterally one or more outlet openings (530) and wholly or partially encloses a second filter element (12) which is provided to fulfil a sound attenuation function.

2. Filter unit (1) according to claim 1, **characterised in that** at least one spacer element (521) projecting into the admittance room (50) is arranged on the interior side of the input part (52) facing the admittance room (50) or is formed on the input part (52), by means of which spacer element (521) it is prevented that the first filter element (11) can enter the diffusion space (500) during assembly or operation.

3. Filter unit (1) according to claim 2, **characterised in that** the at least one spacer element (521) is annular, shoulder-shaped or spiral-shaped and preferably arranged concentrically to the longitudinal axis of the filter unit (1) or that the at least one spacer element (521) is arranged radially or inclined to the longitudinal axis of the filter unit (1).

4. Filter unit (1) according to one of the claims 1 - 3, **characterised in that** the first filter element (11) is cylindrical, cuboidal or cube-shaped or that the first filter element (11) is cylindrical, cuboidal or cube-shaped and rests on the annular or shoulder-shaped and self-contained spacer element (521) in such a way that the adhesive (7) cannot penetrate into the diffusion space (500) .

5. Filter unit (1) according to one of the claims 1 - 4, **characterised in that** the preferably circular or polygonal cross-section or cross-sectional course of the transfer tube (51) is adapted to the cross-section or cross-sectional course of the filter element (11) and that the first filter element (11) is held wholly or partially spaced from the transfer tube (51) or adjacent to the transfer tube (51) by the adhesive (7).

6. Filter unit (1) according to one of the claims 1 - 5, **characterised in that** the preferably cuboid or cube-shaped first filter element (11) comprises a strip-shaped filter material or filter laminate which is folded into several preferably equally sized filter plates (111).

7. Filter unit (1) according to claim 6, **characterised in that** the first filter element (11) extends in a serpentine shape and that the filter plates (111), which are folded in pairs about a folding axis (f), are aligned at least approximately parallel to one another and are spaced apart from one another.

8. Filter unit (1) according to claim 6 or 7, **characterised in that** the filter plates (111) are aligned perpendicular to the longitudinal axis (x) of the filter unit (1) or that the filter plates (111) are aligned parallel and the folding axes (f) are aligned perpendicular to the longitudinal axis (x) of the filter unit (1).

9. Filter unit (1) according to claim 6, 7 or 8, **characterised in that** the filter plates (111) are each held on both sides by means of at least one fastening element (110).

10. Filter unit (1) according to claim 9, **characterised in that** the fastening elements (110) are adhesive joints which connect the filter plates (111) peripherally to each other or that the fastening elements (110) are adhesive joints which connect the filter plates (111) peripherally to each other and close off the intermediate spaces provided between the filter plates (111) on both sides.

11. Suction device for sucking off liquid and/or solid particles, in particular for medical applications, with a filter unit (1) according to one of the claims 1 - 10 connected to a suction unit (2).

12. Suction device according to claim 11, **characterised in that** a container (3) is provided, which is connected on the one hand to a suction line (31), through which a medium (M) can be sucked in, which is divided within the container (3) into a liquid component (MF) and a gaseous component (MG), and on the other hand to a suction line (32), which is connected via a suction unit (2) to the filter unit (1), to which the gaseous component (MG) can be supplied.

## Revendications

1. Unité de filtre (1) pour un dispositif d'aspiration, au moyen duquel un médium gazeux (MG) est filtré, comprenant un boîtier de filtre (5) qui présente un tube de passage (51) avec un espace d'accueil (50) dans lequel est maintenu un premier élément de filtre (11), et une pièce d'entrée (52) qui se raccorde au tube de passage (51) du côté de l'entrée et à laquelle une ligne d'entrée (54) est raccordée ou raccordable sur le côté extérieur opposé à l'espace d'accueil (50), par laquelle ligne d'entrée (54) le médium gazeux (MG) est insérable dans l'espace d'accueil (50), où le premier élément de filtre (11) est relié au tube de passage (51) à l'intérieur de l'espace d'accueil (50) par une colle (7) de telle manière, que l'espace entre le premier élément de filtre (11) et le côté intérieur du tube de passage (51) est rendu étanche et qu'un espace de diffusion (500) est maintenu libre entre le premier élément de filtre (11) inséré et la pièce d'entrée (52),
**caractérisée en ce,**
**que** le boîtier de filtre (5) présente une pièce de sortie (53) se raccordant côté sortie au tube de passage (51), qui est réalisée en forme de couvercle et qui est reliée au tube de passage (51) de manière détachable, d'un seul bloc, par complémentarité de forme ou par liaison de force, éventuellement par des éléments filetés ou des éléments d'encliquetage; et
**que** la pièce de sortie (53) présente latéralement une ou plusieurs ouvertures de sortie (530) et entoure totalement ou partiellement un deuxième élément de filtre (12) qui est prévu pour exercer une fonction d'insonorisation.

2. Unité de filtre (1) selon la revendication 1, **caractérisée en ce qu'**au moins un élément d'espace (521) pénétrant dans l'espace d'accueil (50) est disposé sur la face intérieure de la pièce d'entrée (52) tournée vers l'espace d'accueil (50) ou est formé sur la pièce d'entrée (52), qui empêche le premier élément de filtre (11) de pénétrer dans l'espace de diffusion (500) lors du montage ou du fonctionnement.

3. Unité de filtre (1) selon la revendication 2, **caractérisée en ce que** le au moins un élément d'espace (521) est réalisé en forme d'anneau, d'épaulement ou de spirale et est disposé de préférence concentriquement à l'axe longitudinal de l'unité de filtre (1) ou **en ce que** le au moins un élément d'espace (521) est disposé radialement ou incliné par rapport à l'axe longitudinal de l'unité de filtre (1).

4. Unité de filtre (1) selon une des revendications 1 - 3, **caractérisée en ce que** le premier élément de filtre (11) est de forme cylindrique, parallélépipédique ou cubique ou que le premier élément de filtre (11) est de forme cylindrique, parallélépipédique ou cubique et repose sur l'élément d'espacement (521) annulaire ou en forme d'épaulement fermé sur lui-même de telle sorte que la colle (7) ne puisse pas pénétrer dans l'espace de diffusion (500) .

5. Unité de filtre (1) selon une des revendications 1 - 4, **caractérisée en ce que** la section transversale ou le tracé de section transversale, qui est de préférence circulaire ou polygonal, du tube de passage (51) est adapté à la section transversale ou au tracé de section transversale de l'élément de filtre (11), et **en ce que** le premier élément de filtre (11) est maintenu par la colle (7) à distance totale ou partielle du tube de passage (51) ou en étant adjacent au tube de passage (51).

6. Unité de filtre (1) selon une des revendications 1 - 5, **caractérisée en ce que** le premier élément de filtre (11), de préférence parallélépipédique ou cubique, comprend un matériau de filtre ou un stratifié de filtre en forme de bande, qui est plié en plusieurs plaques de filtre (111) de préférence de même taille.

7. Unité de filtre (1) selon la revendication 6, **caractérisée en ce que** le premier élément de filtre (11) s'étend en serpentin et **en ce que** les plaques de filtre (111), qui sont pliées par paires autour d'un axe de pliage (f), sont orientées au moins approximativement parallèlement entre elles et sont espacées les unes des autres.

8. Unité de filtre (1) selon la revendication 6 ou 7, **caractérisée en ce que** les plaques de filtre (111) sont orientées perpendiculairement à l'axe longitudinal (x) de l'unité de filtre (1) ou **en ce que** les plaques de filtre (111) sont orientées parallèlement et les axes de pliage (f) sont orientés perpendiculairement à l'axe longitudinal (x) de l'unité de filtre (1).

9. Unité de filtre (1) selon la revendication 6, 7 ou 8, **caractérisée en ce que** les plaques de filtre (111) sont maintenues des deux côtés chacune au moyen d'au moins un élément de fixation (110).

10. Unité de filtre (1) selon la revendication 9, **caractérisée en ce que** les éléments de fixation (110) sont des joints adhésifs reliant périphériquement les plaques de filtre (111) entre elles ou **en ce que** les éléments de fixation (110) sont des joints adhésifs reliant périphérique ment les plaques de filtre (111) entre elles et fermant de part et d'autre les espaces prévus entre les plaques de filtre (111) .

11. Dispositif d'aspiration pour l'aspiration de liquide et/ou de particules solides, en particulier pour des applications médicales, avec une unité de filtre (1) selon une des revendications 1 - 10, raccordée à une unité d'aspiration (2) .

12. Dispositif d'aspiration selon la revendication 11, **caractérisée en ce qu'**il est prévu un conteneur (3) qui est relié d'une part à un conduit d'aspiration (31) par lequel peut être aspiré un médium (M) qui est divisé dans le conteneur (3) en un composant liquide (MF) et en un composant gazeux (MG), et d'autre part à un conduit d'aspiration (32) qui est relié par une unité d'aspiration (2) à l'unité de filtre (1) à laquelle peut être amené le composant gazeux (MG).
